# EUROPEAN PATENT APPLICATION

(11) **EP 3 000 698 A1**
(43) Date of publication of application: **30.03.2016**
(21) Application number: 15179686.9
(22) Date of filing: 04.08.2015
(51) Int. Cl.: B62H 5/10

(54) **LOCKING DEVICE OF BICYCLE**

(30) Priority: 29.09.2014 KR 20140130478
(71) Applicant: Samsung Electro-Mechanics Co., Ltd., Gyeonggi-do (KR)
(72) Inventor: JANG, Su Bong, Gyeonggi-Do (KR)
(74) Representative: Grünecker Patent- und Rechtsanwälte PartG mbB

(57) **Abstract**

There is provided a locking device of a bicycle (10) including: a pedal shaft locking unit (110) locking or unlocking rotation of a pedal shalt; and a control unit (120) controlling a locking operation of the pedal shaft locking unit (110) by applying power supplied to the pedal shaft locking unit (110) or cutting off power supplied to the pedal shaft locking unit (110). The pedal shaft locking unit (110) includes a pressing unit (113) including a magnet (113A) pressing the petal shaft such that the petal shaft does not rotate; an armature (111) positioned to face the magnet (113A) and generating electromagnetic force between the armature (111) and the magnet (113A); and an elastic member (112) electrically connecting the magnet (113A) and the armature (111).

## Description

### CROSS-REFERENCE TO RELATED APPLICATION

This application claims the benefit of Korean Patent Application No. 10-2014-0130478, tiled on September 29, 2014, entitled "Locking Device Of Bicycle" which is hereby incorporated by reference in its entirety into this application.

### BACKGROUND

The present disclosure relates to a locking device of a bicycle.

Recently, government-level regulations have been conducted in countries to improve air pollution, led by the U.S. and Europe, and demand for well-being for health based on an increase in income and population aging has grown all over the world.

With such demand, interest on environmentally-friendly electric bicycles in line with well-being has increased, and many businesses have participated in electric bicycle market so the electric bicycle market has rapidly expanded. However, unlike general bicycles, electronic equipment such as a motor, a controller, a battery, a human machine interface (HMI), and the like, is installed in electric bicycles, and thus, a preset of electric bicycles are sold at high prices, compared with general bicycles. For this reason, electric bicycles are frequently stolen.

Thus, in order to discourage theft, a method of locking wheels of electric bicycles is used.

However, in most electric bicycles, wheels and saddles are easily separated, so only frames are separately robbed frequently. Also, an existing anti-theft lock of electric bicycles may be easily broken by a cutter, or a lock which is not easily broken is heavy in weight.

### [Related Art Document]

### [Patent Document]

(Patent Document 1) Korean Patent Laid-Open Publication No. 2012-0132593

### SUMMARY

An aspect of the present disclosure may provide a locking device of a bicycle, capable of preventing bicycle theft.

According to an aspect of the present disclosure, a locking device of a bicycle may include: a pedal shaft locking unit locking or unlocking rotation of a pedal shaft of a bicycle; and a control unit controlling a locking operation of the pedal shaft locking unit by applying power supplied to the pedal shaft locking unit or cutting off power supplied to the pedal shaft locking unit.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a view illustrating a bicycle using a locking device of a bicycle according to an exemplary embodiment of the present disclosure;
FIG. 2 is a block diagram illustrating a locking device of a bicycle according to the exemplary embodiment of the present disclosure;
FIG. 3 is a perspective view illustrating a state in which a pedal shaft locking unit is installed in a pedal shaft in the locking device of a bicycle according to the exemplary embodiment of the present disclosure;
FIG. 4 is a cross-sectional view illustrating a state in which the pedal shaft is locked in the locking device of a bicycle according to the exemplary embodiment of the present disclosure; and
FIG. 5 is a cross-sectional view illustrating a state in which the pedal shaft is unlocked in the locking device of a bicycle according to the exemplary embodiment of the present disclosure.

### DETAILED DESCRIPTION

The objects, features and advantages of the present disclosure will be more clearly understood from the following detailed description of the exemplary embodiments taken in conjunction with the accompanying drawings. Throughout the accompanying drawings, the same reference numerals are used to designate the same or similar components, and redundant descriptions thereof are omitted. Further, in the following description, the terms "first," "second," "one side," "the other side" and the like are used to differentiate a certain component from other components, but the configuration of such components should not be construed to be limited by the terms.

Further, in the description of the present disclosure, when it is determined that the detailed description of the related art would obscure the gist of the present disclosure, the description thereof will be omitted.

Hereinafter, exemplary embodiments of the present disclosure will be described in detail with reference to the accompanying drawings.

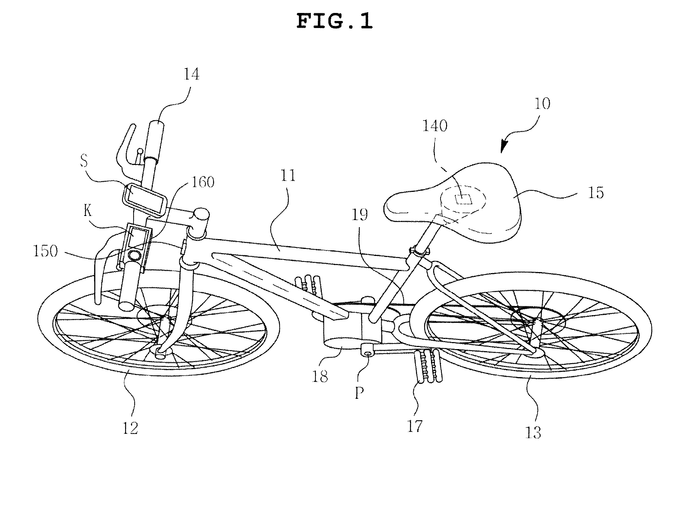

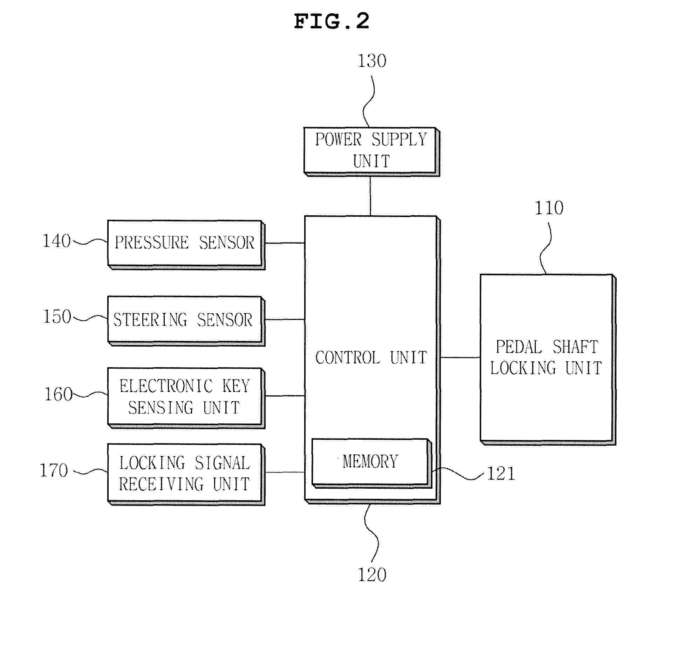

FIG. 1 is a view illustrating a bicycle using a locking device of a bicycle according to an exemplary embodiment of the present disclosure, and FIG. 2 is a block diagram illustrating a locking device of a bicycle according to the exemplary embodiment of the present disclosure.

Referring to FIGS. 1 and 2, a locking device of a bicycle according to an exemplary embodiment of the present disclosure includes a pedal shaft locking unit 110 for locking and unlocking rotation of a pedal shaft P of a bicycle 10 and a control unit 120 controlling a locking operation of the pedal shaft locking unit 110. Also, the locking device of a bicycle according to an exemplary embodiment of the present disclosure may further include an electronic key sensing unit 160, a locking signal receiving unit 170, a pressure sensor 140, and a steering sensor 150.

First, in the electric bicycle 10, a front wheel 12 and a rear wheel 13 are supported by a frame 11, and a chain 19 rotated by a power transmission unit is engaged with the rear wheel 13 through a following sprocket (not shown). Here, the power transmission unit may include pedals 17 and a motor unit 18.

When a force is applied by a user to the pedals 17, the pedals 17 rotate and the rotary power is transmitted to the chain 19 through the pedal shaft P. Here, the pedals 17 are installed on both sides of the pedal shaft P, and a driving sprocket (not shown) is installed in the pedal shaft P. Here, the chain 19 is engaged with an outer side of the driving sprocket.

The motor unit 18 includes a driving motor (not shown), a plurality of gears (not shown) transmitting rotary power of the driving motor to the pedal shaft P, and a cover (not shown) accommodating the driving motor and the pedal shaft P. Here, the driving motor is connected to a power supply unit 130, and when power is supplied to the driving motor 130, a rotational shaft of the driving motor may rotate and rotary power thereof may be transmitted to the chain 19 through the pedal shaft P. Thus, when the bicycle 10 is run by a force applied by the user to the pedal 17, the driving motor assists such that the bicycle 10 may be easily run on the hill, or the like, even though the user applies a smaller amount of force.

The control unit 120 adjusts ON/OFF of power application to the pedal shaft locking unit 110 to control a locking operation of the pedal shaft locking unit 110. Also, the control unit 120 may include a memory 121. Also, the control unit 120 is electrically connected to the electronic key sensing unit 160, the locking signal receiving unit 170, the pressure sensor 140, and the steering sensor 150 and receives a recognized and sensed value from each unit.

The control unit 120 may turn off power application to the pedal shaft locking unit 110 to operate locking of the pedal shaft locking unit 110. That is, the control unit 120 cuts off power of the pedal shaft locking unit 110 such that the pedal shaft locking unit 110 fixes the pedal shaft P not to rotate.

Also, the control unit 120 may turn on power application to the pedal shaft locking unit 110 to operate unlocking of the pedal shaft locking unit 110. That is, the control unit 120 may apply power to the pedal shaft locking unit 110 such that the pedal shaft locking unit 110 rotates the pedal shaft P.

The electronic key sensing unit 160 is provided in the bicycle 10 to sense an electronic key K. Here, when the electronic key K is coupled to the electronic key sensing unit 160, the electronic key sensing unit 160 recognizes the electronic key K, and the control unit 120 connected to the electronic key sensing unit 160 determines whether a key value stored in the electronic key K is identical to a key value stored in the memory 121 of the control unit 120. Here, the key value stored in the electronic key K may be a password value, for example.

The electronic key K may be formed of HMI, for example, but the type of the electronic key K of the locking device of a bicycle according to an exemplary embodiment of the present disclosure is not limited thereto.

The locking signal receiving unit 170 is provided in the bicycle 10 and receives locking and unlocking signals transmitted through a portable device S.

Here, the portable device S may be formed of a smartphone, a tablet, or the like, for example, but the type of the portable device S of the locking device of the bicycle 10 according to an exemplary embodiment of the present disclosure is not limited thereto. Here, the locking signal receiving unit 170 may receive the locking and unlocking signals transmitted through an application of the smartphone, the tablet, and the like. Thus, the user may operate the application of the smartphone, the table, and the like, to select locking and unlocking of the locking device of the bicycle 10.

The locking and unlocking signals transmitted from the portable device S may include a password value. Here, the locking signal receiving unit 170 may receive locking and unlocking signals including a password value and transmit the same to the control unit 120. The control unit 120 compares the password value included in the locking and unlocking signals with a password value stored in the memory 121 to determine whether to reflect the locking and unlocking signals. Here, setting of the password stored in the memory 121 may be changed through an application of the smartphone, the tablet, or the like, as the portable device S.

The pressure sensor 140 is positioned in a saddle 15 of the bicycle 10 to detect pressure generated when the user gets on the bicycle 10. Here, the pressure sensor 140 transmits the detected pressure value to the control unit 120.

Here, the control unit 120 compares the pressure value detected through the pressure sensor 140 with a preset pressure value stored in the memory 121 to determine whether the user has got on the bicycle. Here, when the pressure value of the pressure sensor 140 is greater than the preset pressure value stored in the memory 121, the control unit 120 determines that the user has got on the bicycle, and when the pressure value of the pressure sensor 140 is smaller than the preset pressure value stored in the memory 121, the control unit 120 determines that the user has not got on the bicycle.

The steering sensor 150 senses rotation of a handle 14 of the bicycle 10. Here, the steering sensor 150 may be formed as an optical sensor. The steering sensor 15 senses rotation of the handle 14 through reflected light after irradiating light toward the handle 14. However, in the locking device of the bicycle according to an exemplary embodiment of the present disclosure, the steering sensor 150 is not limited to an optical sensor and, for example, the steering sensor 150 may be configured as a hall sensor, or the like, to sense rotation of a magnetic member provided in a rotational shaft of the handle 14 to detect rotation of the handle 14.

Also, the steering sensor 150 senses a rotation angle of the handle 14 in a clockwise or counterclockwise direction and transmits the same to the control unit 120.

The control unit 120 compares the rotation angle of the handle 14 detected by the steering sensor 150 with a preset rotation angle stored in the memory 121 of the control unit 120, and when it is determined that the handle 14 has rotated at an angle greater than the preset rotation angle, the control unit 120 determines that the user has not got on the bicycle 10 and stopped operation. Meanwhile, the control unit 120 compares the rotation angle of the handle 14 detected by the steering sensor 150 with the preset rotation angle stored in the memory 121 of the control unit 120, and when it is determined that the handle 14 has rotated at an angle less than the preset rotation angle, the control unit 120 determines that the user has got on the bicycle 10 and operates the bicycle. Here, the preset rotation angle may be determined as 90° in a clockwise or counterclockwise direction. That is, when a front side of the bicycle 10 is determined as 0°, if a rotation angle of the handle 14 is outside of a range from -90° to +90°, it is determined that the user has stopped operation, and when a rotation angle of the handle 14 is within the range from -90° to +90°, it is determined that the user has got on the bicycle and operates it. However, in the locking device of the bicycle according to an exemplary embodiment of the present disclosure, the preset rotation angle is not limited thereto.

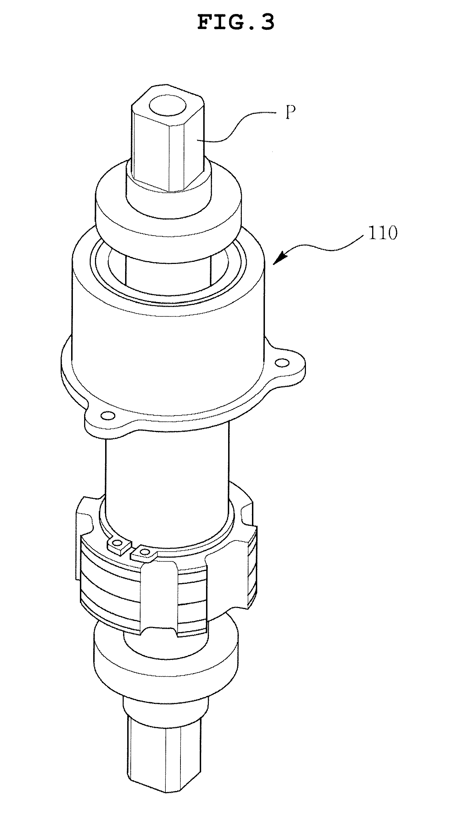

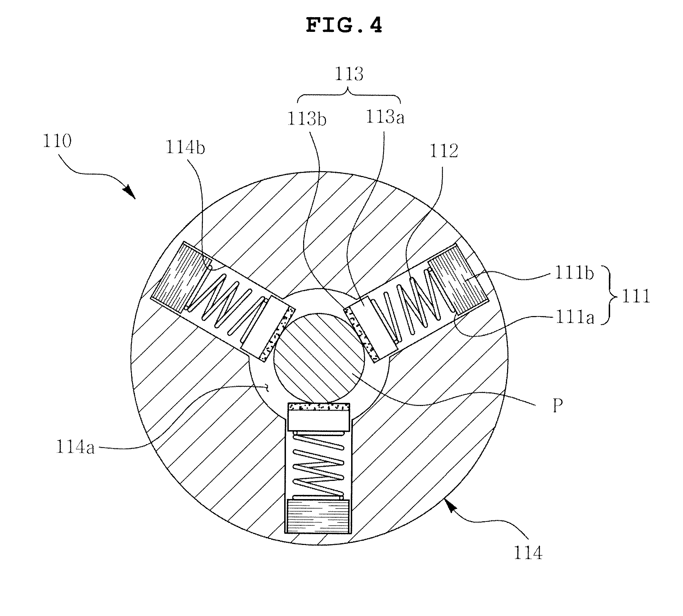

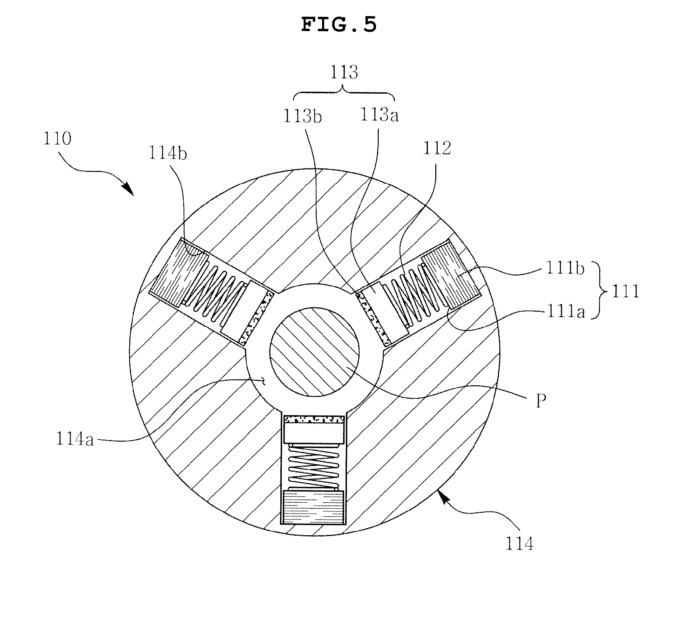

FIG. 3 is a perspective view illustrating a state in which a pedal shaft locking unit is installed in a pedal shaft in the locking device of a bicycle according to the exemplary embodiment of the present disclosure, FIG. 4 is a cross-sectional view illustrating a state in which the pedal shaft is locked in the locking device of a bicycle according to the exemplary embodiment of the present disclosure, and FIG. 5 is a cross-sectional view illustrating a state in which the pedal shaft is unlocked in the locking device of a bicycle according to the exemplary embodiment of the present disclosure.

Referring to FIGS. 3 and 4, the pedal shaft locking unit 110 includes a pressing unit 113 pressing the pedal shaft P, an armature 111 positioned to face the pressing unit 113, and an elastic member 112 elastically connecting the armature 111 and the magnet 113a.

The pressing unit 113 includes a magnet 113a connected to one side of the elastic member 112 and a rubber member 113b provided in an end of the magnet 113a.

Here, when the pedal shaft locking unit 110 performs a locking operation, the pressing unit 113 presses the pedal shaft P. Here, the magnet 113a may press the pedal shaft P, or the rubber member 113b may be further provided in an end of the magnet 113a and the pedal shaft P may be pressed through the rubber member 113b.

The magnet 113a is positioned in a direction in which the magnet 113a faces the armature 111. That is, one surface of the magnet 113a is positioned in a direction toward the armature 111 and the other surface of the magnet is positioned in a direction toward the pedal shaft P.

The rubber member 113b may be formed of rubber, synthetic rubber, a synthetic resin including rubber, plastic, or the like. However, in the locking device of a bicycle according to the exemplary embodiment of the present disclosure, the material of the rubber member 113b is not limited thereto.

The armature 111 includes a core 111a and a coil 111b wound around an outer circumferential surface of the core 111a.

Referring to FIG. 4, when power application to the coil 111b of the armature 111 is released, electromagnetic force acting in a direction in which the armature 111 and the magnet 113a attract each other is released, and the elastic member 112 connecting the armature 111 and the magnet 113a expands. Thus, the pressing unit 113 including the magnet 113a moves in a direction toward the pedal shaft P and presses the pedal shaft P.

Referring to FIG. 5, when power is applied to the coil 111b of the armature 111, electromagnetic force is generated in a direction in which the armature 111 and the magnet 113a attract each other and the elastic member 112 connecting the armature 111 and the magnet 113a contracts.

Thus, the pressing unit 113 including the magnet 113a moves in a direction away from the pedal shaft P. Here, electromagnetic force having different polarities is generated on the surfaces of the magnet 113a and the armature 111 facing each other.

The elastic member 112 may be configured as a coil spring, for example, but the elastic member 112 of the locking device of a bicycle 10 according to the exemplary embodiment of the present disclosure is not limited thereto.

A case 114 has an accommodation portion 114a accommodating the pressing unit 113, the armature 111, and the elastic member 112 therein. Also, the case 114 is positioned to be spaced apart from an outer surface of the pedal shaft P by a predetermined distance. Also, the case 114 has a guide portion 114b guiding movement of the pressing unit 113.

Hereinafter, an operation of the locking device of a bicycle according to the exemplary embodiment of the present disclosure will be described.

For example, referring to FIGS. 2 and 4, in order for the locking device of the bicycle to perform a locking operation, when it is determined that a pressure value detected by the pressure sensor 140 is smaller than a preset pressure value stored in the memory 121, when it is determined that a rotation angle of the handle 14 detected by the steering sensor 150 is equal to or greater than 90° in the clockwise or counterclockwise direction, and when it is determined that the electronic key K has been separated from the electronic key sensing unit 160, the control unit 120 operates locking of the pedal shaft locking unit 110. Here, the control unit 120 cuts off power applied from the power supply unit 130 to the armature 111 of the pedal shaft locking unit 110. Thus, the electromagnetic force acting in a direction in which the armature 111 and the magnet 113a of the pedal shaft locking unit 110 attract each other is released, and contracted elastic force of the elastic member 112 expands and the pressing unit 113 presses the pedal shaft P. As a result, a locked state in which the pedal shaft locking unit 110 fixes the pedal shaft P not to rotate is maintained.

Referring to FIGS. 2 and 5, in order for the locking device of the bicycle to perform an unlocking operation, when it is determined that the user has got on the bicycle through a pressure value detected by the pressure sensor 140, when it is determined that a rotation angle of the handle 14 detected by the steering sensor 150 is smaller than 90° in the clockwise or counterclockwise direction, and when it is determined that the electronic key K has been coupled to the electronic key sensing unit 160, the control unit 120 operates unlocking of the pedal shaft locking unit 110. Here, the control unit 120 applies power applied from the power supply unit 130 to the armature 111 of the pedal shaft locking unit 110. Thus, the electromagnetic force is generated into a direction that the armature 111 and the magnet 113a of the pedal shaft locking unit 110 pull each other the elastic member 112 contracts, and the pedal shaft P pressure of the pressing unit 113 is cut off. As a result, the pedal shaft locking unit 110 can maintain unlocked state so that the pedal shaft P can rotate.

In another example, referring to FIGS. 2 and 4, in order for the locking device of the bicycle to perform a locking operation, when it is determined that a pressure value detected by the pressure sensor 140 is smaller than the preset pressure value stored in the memory 121, when it is determined that a rotation angle of the handle 14 detected by the steering sensor 150 is greater than 90° in the clockwise or counterclockwise direction, and when a locking signal is received by the locking signal receiving unit 170, the control unit 120 operates locking of the pedal shaft locking unit 110. Here, the control unit 120 cuts off power applied from the power supply unit 130 to the armature 111 of the pedal shaft locking unit 110 to maintain a locked state in which the pedal shaft locking unit 110 fixes the pedal shaft P not to rotate.

Referring to FIGS. 2 and 5, in order for the locking device of the bicycle to perform an unlocking operation, when it is determined that the user has got on the bicycle through a pressure value detected by the pressure sensor 140, when it is determined that a rotation angle of the handle 14 detected by the steering sensor 150 is smaller than 90° in the clockwise or counterclockwise direction, and when an unlocking signal is received by the locking signal receiving unit 170, the control unit 120 operates unlocking of the pedal shaft locking unit 110. Here, the control unit 120 applies power from the power supply unit 130 to the armature 111 of the pedal shaft locking unit 110 and the pedal shaft locking unit 110 can maintain unlocked state so that the pedal shaft P can rotate.

Although the embodiments of the present disclosure have been disclosed for illustrative purposes, it will be appreciated that the present disclosure is not limited thereto, and those skilled in the art will appreciate that various modifications, additions and substitutions are possible, without departing from the scope and spirit of the disclosure.

Accordingly, any and all modifications, variations or equivalent arrangements should be considered to be within the scope of the disclosure, and the detailed scope of the disclosure will be disclosed by the accompanying claims.

## Claims

1. A locking device of a bicycle, the locking device comprising:
a pedal shaft locking unit locking or unlocking rotation of a pedal shaft of a bicycle; and
a control unit controlling a locking operation of the pedal shaft locking unit by applying power supplied to the pedal shaft locking unit or cutting off power supplied to the pedal shaft locking unit.

2. The locking device of claim 1, wherein the pedal shaft locking unit includes:
a pressing unit including a magnet pressing the petal shaft such that the petal shaft does not rotate;
an armature positioned to face the magnet and generating electromagnetic force between the armature and the magnet; and
an elastic member electrically connecting the magnet and the armature.

3. The locking device of claim 2, wherein when power is applied to the armature, electromagnetic force is generated between the magnet and the armature to enable the magnet and the armature to attract each other and the pressing unit is separated from the petal shaft, and when power supplied to the armature is cut off, the electromagnetic force acting between the magnet and the armature is released and the pressing unit presses the pedal shaft.

4. The locking device of claim 2, wherein the armature includes a core and a coil wound around the core.

5. The locking device of claim 2, wherein the pressing unit further includes a rubber member provided in an end of the magnet facing the pedal shaft.

6. The locking device of claim 1, further comprising:
an electronic key sensing unit provided in the bicycle and sensing an electronic key.

7. The locking device of claim 6, wherein when the electronic key is separated from the electronic key sensing unit, the control unit operates locking of the pedal shaft locking unit, and
when the electronic key is coupled to the electronic key sensing unit, the control unit operates unlocking of the pedal shaft locking unit.

8. The locking device of claim 6, wherein the electronic key sensing unit senses an electronic key formed of human machine interface (HMI).

9. The locking device of claim 1, further comprising:
a pressure sensor positioned in a saddle of the bicycle and detecting pressure generated when a user gets on the bicycle;
a steering sensor sensing rotation of a handle of the bicycle; and
an electronic key sensing unit provided in the bicycle and sensing an electronic key.

10. The locking device of claim 9, wherein when it is determined that a pressure value detected by the pressure sensor is smaller than a preset pressure value, when it is determined that a rotation angle of the handle in a clockwise direction or counterclockwise direction detected by the steering sensor is equal to or greater than a preset rotation angle, and when it is sensed that the electronic key has been separated from the electronic key sensing unit, the control unit operates locking of the pedal shaft locking unit, and
when it is determined that a pressure value detected by the pressure sensor is greater than the preset pressure value, when it is determined that a rotation angle of the handle in the clockwise direction or counterclockwise direction detected by the steering sensor is smaller than the preset rotation angle, and when it is sensed that the electronic key has been coupled to the electronic key sensing unit, the control unit operates unlocking of the pedal shaft locking unit.

11. The locking device of claim 10, wherein the control unit includes a memory storing the preset pressure value and the preset rotation angle.

12. The locking device of claim 10, wherein the preset rotation angle is 90°.

13. The locking device of claim 9, wherein the electronic key sensing unit senses an electronic key formed of HMI.

14. The locking device of claim 1, further comprising:
a locking signal receiving unit provided in the bicycle and receiving locking and unlocking signals transmitted through a portable device.

15. The locking device of claim 14, wherein the locking signal receiving unit receives the locking and unlocking signals transmitted through an application of a smartphone or a tablet as the portable device.

16. The locking device of claim 14, wherein when the locking signal from the portable device is received by the locking signal receiving unit, the control unit operates locking of the pedal shaft locking unit, and
when the unlocking signal from the portable device is received by the locking signal receiving unit, the control unit operates unlocking of the pedal shaft locking unit.

17. The locking device of claim 1, further comprising:
a pressure sensor positioned in a saddle of the bicycle and detecting pressure generated when a user gets on the bicycle;
a steering sensor sensing rotation of a handle of the bicycle; and
a locking signal receiving unit provided in the bicycle and receiving locking and unlocking signals transmitted through the portable device.

18. The locking device of claim 17, wherein when it is determined that a pressure value detected by the pressure sensor is smaller than a preset pressure value, when it is determined that a rotation angle of the handle in a clockwise direction or counterclockwise direction detected by the steering sensor is equal to or greater than a preset rotation angle, and when the locking signal is received by the locking signal receiving unit, the control unit operates locking of the pedal shaft locking unit, and
when it is determined that a pressure value detected by the pressure sensor is greater than the preset pressure value, when it is determined that a rotation angle of the handle in the clockwise direction or counterclockwise direction detected by the steering sensor is smaller than the preset rotation angle, and when the unlocking signal is received by the locking signal receiving unit, the control unit operates unlocking of the pedal shaft locking unit.

19. The locking device of claim 18, wherein the control unit includes a memory storing the preset pressure value and the preset rotation angle.

20. The locking device of claim 18, wherein the preset rotation angle is 90°.
